# EUROPÄISCHE PATENTSCHRIFT

(11) **EP 1 419 583 B1**
(45) Veröffentlichungstag und Bekanntmachung des Hinweises auf die Patenterteilung: **16.02.2005**
(21) Anmeldenummer: 02767404.3
(22) Anmeldetag: 19.08.2002
(51) Int. Cl.: H04B 1/10

(54) **ADAPTIVES FILTERVERFAHREN UND FILTER ZUM FILTERN EINES FUNKSIGNALS IN EINEM MOBILFUNK-KOMMUNIKATIONSSYSTEM**
ADAPTIVE FILTERING METHOD AND FILTER FOR FILTERING A RADIO SIGNAL IN A MOBILE RADIO-COMMUNICATION SYSTEM
PROCEDE DE FILTRAGE ADAPTATIF ET FILTRES PERMETTANT DE FILTRER UN SIGNAL RADIO DANS UN SYSTEME DE COMMUNICATION RADIOMOBILE

(30) Priorität: 23.08.2001 DE 10141394; 23.08.2001 EP 01120253
(43) Veröffentlichungstag der Anmeldung: 19.05.2004
(73) Patentinhaber: Siemens Aktiengesellschaft, 80333 München (DE)
(72) Erfinder: DIETERICH, Hans, 89075 Ulm (DE); JELONNEK, Björn, 89079 Ulm (DE)
(86) Internationale Anmeldenummer: PCT/EP2002/009262
(87) Internationale Veröffentlichungsnummer: WO 2003/019802

(56) Entgegenhaltungen:
- EP-A- 0 722 226
- EP-A- 1 005 021
- WO-A-00/72454
- US-A- 6 047 171
- US-A- 6 134 265
- US-B1- 6 178 211

## Beschreibung

Die vorliegende Erfindung bezieht sich auf ein Verfahren zum Filtern eines Funksignals mit den oberbegrifflichen Merkmalen des Patentanspruchs 1 bzw. 7 sowie auf Filtervorrichtungen zum Durchführen solcher Verfahren.

Bei den derzeit bestehenden zellularen Mobilfunksystemen, beispielsweise gemäß dem Standard GSM (Global System for Mobile Communications), kommunizieren eine oder mehrere netzseitige Basisstationen mit stationären oder mobilen teilnehmerseitigen Stationen über Funkschnittstellen. Um auch größere räumliche Gebiete bei einer begrenzten Frequenzbandbreite abdecken zu können, sind derartige Mobilfunksysteme in der Regel zellular aufgebaut.

Jeder Funkzelle ist dabei zumindest ein Funkkanal zugewiesen, wobei jedem der Funkkanäle wiederum ein begrenzter Frequenzbereich der insgesamt verfügbaren Frequenzbandbreite zugewiesen wird. Dabei werden in einer Funkzelle die Funkkanäle benachbarter Funkzellen in der Regel nicht verwendet, um gegenseitige Störungen zu vermeiden. Da jedoch die Funkfelddämpfung in einem derartigen Funksystem beschränkt ist, werden in jeder Funkzelle insbesondere durch die Funkkanäle der unmittelbar benachbarten Funkzellen Störungen oder Interferenzen hervorgerufen. Dies betrifft vor allem jeweils den Grenzbereich zwischen zwei benachbarten Funkzellen, dies insbesondere dann, wenn das Frequenzband des Funkkanals der einen Funkzelle direkt zu dem Frequenzband des Funkkanals der anderen, benachbarten Funkzelle benachbart ist. Derartige Störungen werden als Nachbarkanalstörungen bezeichnet. Der Nachbarkanal-Störabstand, d.h. das Verhältnis zwischen der Signalleistung und der Störleistung benachbarter Kanäle, beeinflusst wesentlich die spektrale Effizienz eines Funksystems.

In Mobilfunk-Empfängern wird das empfangene Mobilfunksignal üblicherweise einem Empfangsfilter zur Filterung zugeführt. Wie aus Fig. 3 ersichtlich, hängt die Wirkung eines derartigen Empfangsfilters primär von der spektralen Lage und der Leistungsdichte S(f) der Nachbarkanalstörungen ab. So treten bei dem in Fig. 3 gezeigten Beispiel auch nach der Empfangsfilterung sowohl am unteren, schwarz markierten Endbereich 18 als auch am oberen, schraffiert markierten Endbereich 19 des Frequenzspektrums des Funkkanals Nr. 1 Nachbarkanalstörungen aufgrund der Funkkanäle Nr. 0 bzw. Nr. 2 der benachbarten Funkzellen auf. Während die noch im unteren Endbereich 18 verbliebenen Nachbarkanalstörungen vernachlässigbar sind, sind die im oberen Endbereich 19 verbliebenen Nachbarkanalstörungen noch relativ stark. Im Gegensatz zu Fig. 3 besitzen reale Empfangsfilter grundsätzlich keine unendliche Flankensteilheit, wodurch der Störeinfluss der Nachbarkanäle weiter erhöht wird.

Empfangsfilter können jedoch nicht derart dimensioniert werden, dass sie einerseits starke Nachbarkanalstörungen unterdrücken und damit die Bit-Fehlerrate verbessern, andererseits bei Nichtauftreten von Nachbarkanalstörungen die Bit-Fehlerrate aber nicht verschlechtern. Ein Empfangsfilter, welches für beide Fälle optimal ist, kann nicht dimensioniert werden.

Aus der WO 00/72454 A1 ist ein Verfahren zum Filtern eines Mobilfunksignals bekannt, bei dem ein über einen Mobilfunkkanal empfangenes Mobilfunksignal vor seiner weiteren Verarbeitung gefiltert wird, wobei das empfangene Mobilfunksignal hinsichtlich des Auftretens von Nachbarkanalstörungen analysiert wird und bei Feststellen von Nachbarkanalstörungen in dem empfangenen Mobilfunksignal dieses selektiv vor seiner weiteren Verarbeitung zur Unterdrückung der Nachbarkanalstörungen gefiltert wird. Die Analyse erfolgt dabei vorzugsweise burstweise, wobei jeweils das Frequenzspektrum der einzelnen Bursts analysiert wird. Insbesondere werden die am oberen Ende des Frequenzspektrums eines Bursts enthaltene Energie und die am unteren Ende des Frequenzspektrums des Bursts enthaltene Energie bestimmt und miteinander verglichen, um bei einer definierten Abweichung zwischen diesen derart bestimmten Energien auf das Vorliegen von Nachbarkanalstörungen zu schließen. Das somit selektiv gefilterte Mobilfunksignal wird anschließend beispielsweise einem Entzerrer zur weiteren Verarbeitung zugeführt.

Derzeit wird für das bestehende Mobilfunksystem GSM eine neue Funkschnittstellentechnik eingeführt, die als EDGE (Enhanced Data Rates for GSM Evolution) bzw. auch als EGPRS (Enhanced General Packet Radio System) bezeichnet wird. Diese neue Technik ermöglicht hochratige mobile Video- und Internetanwendungen, wobei der Datendurchsatz auf derzeit bis zu 384 kbits/s je Träger erhöht werden kann. Um dies zu erreichen, wird bei EDGE die bei GSM bislang übliche binäre GMSK (Gaussian Minimum Shift Keying) durch eine achtwertige PSK-Modulation (PSK: Phase Shift Keying) ersetzt. Diese Modulationsart ist im allgemeinen empfindlicher gegenüber selektiven Empfangsbandfiltern als die GMSK-Modulation. Um die geforderten Empfangsempfindlichkeiten für EDGE nach den derzeit beabsichtigten GSM-Vorgaben zu erreichen, sollte die bislang überwiegend fixe selektive Empfangsbandfilterung durch eine adaptive Filterung ersetzt werden. Für GMSK ist dies ebenfalls optional möglich, wobei dies in der vorstehend genannten WO 00/72454 A1 beschrieben ist. Beschrieben ist darin auch eine mögliche Vorgehensweise der adaptiven Empfangsbandfilterung.

Aus US 6,178,211 B1 ist ein Empfänger bekannt, bei dem ein trägerfrequentes Signal empfangen und in ein digitales zwischenfrequentes Signal umgesetzt wird. Das trägerfrequente Signal wird entweder vor oder nach der Digitalisierung einer "Automatic Gain Control, AGC" zugeführt. Mit Hilfe eines adaptiven Kontrollsystems wird im Zwischenfrequenzbereich ein Signalpegel nach einer Kanalfilterung detektiert und mit einem vorgegebenen Schwellwert verglichen. Der Schwellwert wird in Abhängigkeit der Bandbreite im Zwischenfrequenzbereich ausgewählt, um ein schnelles Umschalten bzw. eine schnelle Anpassung der Bandbreite mit minimalen Transienten-Effekten zu realisieren.

Aus US 6,047,171 ist ein Empfänger mit zwei Zwischenfrequenzfiltern bekannt. Dabei weist ein Zwischenfrequenzfilter eine engere Bandbreite als der andere Zwischenfrequenzfilter auf. Mit Hilfe eines Umschalters wird zwischen den beiden Zwischenfrequenzfiltern umgeschaltet.

Aus EP 0 722 226 A1 ist ein Verfahren zur Filterung in einem Empfänger bekannt. Dabei wird eine absolute Signalstärke bestimmt und basierend darauf eine Frequenzantwort eines Filters im Empfänger abgeglichen.

Die Aufgabe der vorliegenden Erfindung besteht darin, die bestehenden Möglichkeiten derart zu erweitern, dass auch ein Signal für EDGE-Empfänger ausreichend aufbereitbar wird. In vorteilhafter Weise soll dabei gemäß bevorzugter Ausführungsform in möglichst geringem Umfang in die bestehenden Techniken und Verfahren eingegriffen werden.

Diese Aufgabe wird durch Verfahren mit den Merkmalen der Patentansprüche 1, 4 bzw. 7 bzw. Filtervorrichtungen mit den Merkmalen der Patentansprüche 13 bzw. 14 gelöst. Vorteilhafte Ausgestaltungen sind Gegenstand von abhängigen Ansprüchen.

Besonders vorteilhaft für das Bestimmen, ob und/oder auf welcher Seite des Frequenzspektrums eines Funkkanals ein störendes Nachbarkanalsignal vorliegt, ist die Möglichkeit, das Signal-zu-Rausch-Verhältnis zu ermitteln und beim Konstruieren eines Filters zu verwenden. In vorteilhafter Weise kann das Bestimmen des Signal-zu-Rausch-Verhältnisses dabei während einer Trainingssequenz eines empfangenen Bursts bestimmt werden. Insbesondere ist es auch möglich, das Signal-zu-Rausch-Verhältnis einmal mit einer engen und einmal mit einer breiten Empfangsbandfilterung vorzunehmen und als Kriterium für Nachbarkanalstörungen die Differenz der beiden bestimmten Signal-zu-Rausch-Verhältnisse in Relation zu einer oder mehreren Schwellenwerten zu betrachten. Während im Fall von Nachbarkanalenergie ein größerer Differenzbetrag entsteht, wirken sich Gleichkanalstörungen und rauschartige Störungen, insbesondere Gauss'sches Rauschen kaum auf die derart geschätzten bzw. bestimmten Signal-zu-Rausch-Werte aus.

In zweckmäßiger Weise kann die Dimensionierung eines adaptiven Filters zum Herausfiltern von störenden Signalen eines Nachbarkanals dabei abhängig von der Stärke der Störung gemacht werden. Als Maß der Stärke der Störung kann die Energiestärke der störenden Signale, hier Nachbarkanalstörungen und/oder der Signal-zu-Rausch-Verhältnisse bestimmt werden.

Während prinzipiell die Bestimmung eines einzelnen Filters möglich ist, der ab einem bestimmten erreichten Schwellenwert angewendet wird, ist auch die Bestimmung einer variablen adaptiven Filtergenerierung möglich, wobei in jedem Fall eines gestörten Signals ein eigener Filter erzeugt wird. Mit Blick auf eine wirtschaftliche Anwendung ist jedoch ein Verfahren sinnvoll, bei dem weder ein einzelner Filter noch eine unendliche Anzahl von Filtern durch jeweilige Neubestimmung erzeugt wird, sondern bei dem mehrere Schwellenwerte festgesetzt werden, bei deren Überschreiten jeweils ein entsprechender adaptiver Filter für einen gewissen Frequenzbereich eingesetzt wird.

Besonders vorteilhaft ist ein Verfahren zum Filtern eines Funksignales, welches in der empfangenden Station bereits gefilterte Signale einer speziellen Signalverarbeitung zuführt, bei der zumindest ein Teil der vorherigen Filterwirkung vor einer noch weiteren Signalverarbeitung rückgängig gemacht wird. Dadurch kann ein herkömmliches Empfangsgerät verwendet werden, welches bereits hinsichtlich seiner Funktionalität geprüft ist und idealer Weise auch die Marktzulassung besitzt, um ein solches Gerät für eine weitere Funktionalität zu erweitern. Das Rückgängigmachen der Filterwirkung kann dabei durch einen Inversions- oder Verbreiterungsfilter besonders vorteilhaft durchgeführt werden. Dazu ist beispielsweise der Einsatz eines Gauss-Seidel-Verfahren möglich. In zweckmäßiger Weise wird das Signal, bei dem eine vorherige Filterwirkung zumindest teilweise rückgängig gemacht wurde, dann einer weiteren speziellen Filterung zugeführt. Als weitere Filterung kann insbesondere eine adaptive Filterung eingesetzt werden, die in Abhängigkeit einer erfassten Störung durchgeführt wird. Insbesondere wird es möglich, beispielsweise durch das Einsetzen eines entsprechenden Moduls ein Ausgabesignal eines Empfangsfilters in einem herkömmlichen GMSK-Empfänger zum Bereitstellen eines herkömmlichen GMSK-Signals abzugreifen. Neben einem Ausgang zum Ausgeben des bisherigen GMSK-Signals kann das abgegriffene Signal dann auch dem Modul bzw. der Funktion zum Rückgängigmachen der bisherigen Filterwirkung zugeführt werden, so dass anschließend eine Aufbereitung des Signals mittels beispielsweise eines adaptiven Empfangsbandfilters möglich ist, um letztendlich ein EDGE-Signal zu erzeugen. Auf diese Art und Weise ist eine Aufrüstung eines bestehenden Empfängers derart möglich, dass dieser zukünftig ein EDGE-Signal oder ein EDGE- und ein GMSK-Signal ausgibt.

Ein Ausführungsbeispiel wird nachfolgend anhand der Zeichnung näher erläutert. Es zeigen:
- Fig. 1: schematisch einzelne Stationen eines FunkKommunikationssystems;
- Fig. 2: einen Ausschnitt von Bauelementen bzw. Modulen in einer Empfangsstation;
- Fig. 3: eine allgemeine Darstellung zur Erläuterung von Nachbarkanalstörungen und
- Fig. 4: schematisch eine Filteranordnung zum Erläutern des Grundprinzips eines Empfängers.

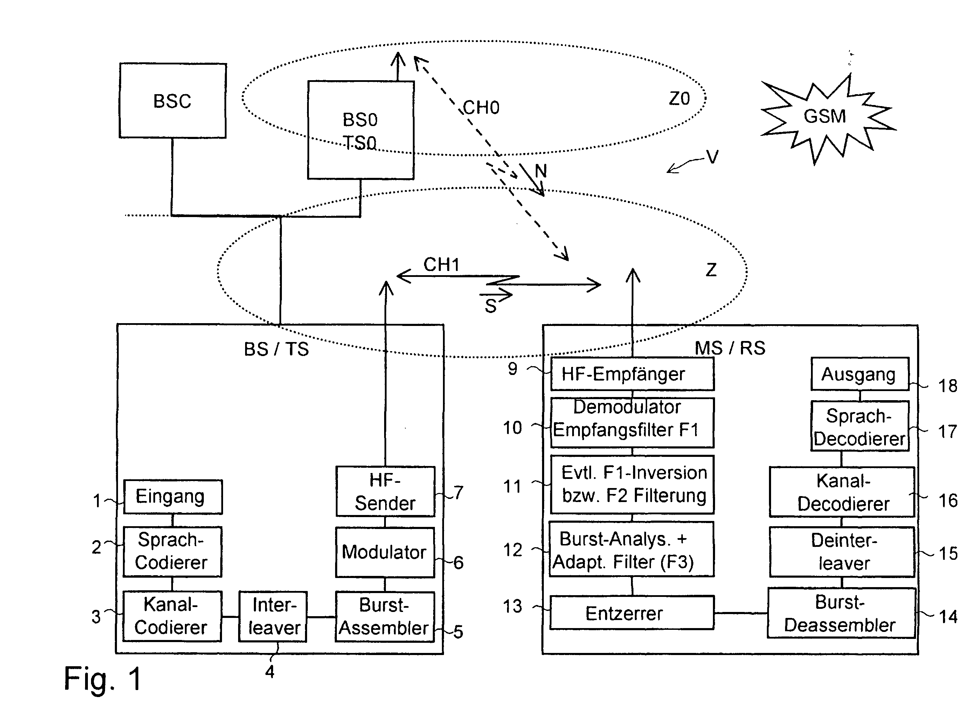

Wie aus Fig. 1 ersichtlich, besteht ein Kommunikationssystem, insbesondere ein Mobilfunk-Kommunikationssystem aus einer Vielzahl von Einrichtungen, die netzseitig untereinander verbunden sind. Von den netzseitigen Einrichtungen sind zur Vereinfachung lediglich ein Basisstations-Steuerzentrum BSC und zwei daran angeschlossene Basisstationen BS und BS0 dargestellt. Jede der Basisstationen BS bzw. BS0 bildet eine oder mehrere Funkzellen Z bzw. Z0 aus, wobei Kommunikationsverbindungen mit stationären oder mobilen teilnehmerseitigen Stationen MS innerhalb der entsprechenden Funkzellen Z aufgebaut werden können. Der Aufbau einer Kommunikationsverbindung erfolgt dabei über die Schnittstelle, hier die Funk-Schnittstelle V. Die Funk-Schnittstelle V ist, wie auch aus Fig. 3 ersichtlich, in eine Vielzahl von zueinander benachbarten Frequenzbändern f0 - f1, f1 - f2, f2 - f3 aufgeteilt, wobei die einzelnen Frequenzbänder f0 - f1, f1 - f2, f2 - f3 entsprechenden Funkkanälen CH0, CH1 bzw. CH2 zugeordnet sind. Die Zuordnung der Funkkanäle CH1, CH0 innerhalb des FunkKommunikationssystems GSM erfolgt dabei derart, dass beispielsweise für Funkverbindungen zwischen der Basisstation BS mit der Funkzelle Z zu entsprechenden teilnehmerseitigen Stationen MS der erste Funkkanal CH1 verfügbar ist, während für weitere Basisstationen BS0 mit entsprechenden Funkzellen Z0 andere Funkkanäle CH0 zugewiesen werden.

Wie dies in Fig. 1 dargestellt ist, werden die übertragenen Signale S bzw. die Funkverbindung über den Funkkanal CH1 zwischen der ersten Basisstation BS und der dargestellten teilnehmerseitigen Station MS durch Signale N auf dem Funkkanal CH0 der benachbarten zweiten Basisstation BS0 gestört. Wie aus Fig. 3 ersichtlich, handelt es sich bei den beiden dargestellten Funkkanälen CH1 und CH0 um benachbarte Funkkanäle, so dass Nachbarkanalstörungen nicht auszuschließen sind.

Zur Vereinfachung der nachfolgenden Beschreibung werden nachfolgend eine zumindest zeitweilig sendende Station TS, im vorliegenden Beispiel soll dies die erste Basisstation BS sein, und eine die gesendeten Signale, Daten bzw. Informationen empfangende Station, im vorliegenden Ausführungsbeispiel die teilnehmerseitige mobile Station MS, betrachtet. Als weitere, auf dem Nachbarkanal CH0 sendende Station wird hier die zweite Basisstation BSO angenommen. Diese Vereinfachung wird gewählt, da bei umgekehrten Aussendungen von einer teilnehmerseitigen Station MS zu einer netzseitigen Basisstation BS die gleiche Verfahrensweise angewendet werden kann, wobei dann die teilnehmerseitige Stationen MS die sendende Station und die empfängerseitige Station BS die Basisstation ist.

Wie der Darstellung schematisch zu entnehmen ist, weisen sowohl die sendende als auch die empfangende Station eine Vielzahl von Bauelementen und Software-gestützten und/oder Hardware-gestützten Modulen auf, von denen ebenfalls nur ein Teil dargestellt ist.

Senderseitig weist die sendende Station BS bzw. TS eine Eingabeeinrichtung 1 auf, die z. B. von einer anderen Station oder Einrichtung übertragene Daten aufnimmt. Im allgemeinen können diese Daten von verschiedenartigen Anwendungen stammen, z.B. Sprachdaten, Internetbrowser bzw. WAP. Zur Illustration wird im weiteren von einer Sprachübertragung ausgegangen. Bei der Eingabeeinrichtung 1 kann es sich beispielsweise aber auch um ein Mikrofon einer sendenden Station handeln. Ein Sprachcodierer 2 wandelt ein zu übertragendes analoges Sprachsignal in einen digitalen Bitstrom um und führt diesen einem Kanalcodierer 3 zu. Der Kanalcodierer 3 fügt den eigentlichen Nutzbit in Abhängigkeit von einem bestimmten Kanalcodierverfahren zusätzliche redundante Bit oder Informationen hinzu, welche empfängerseitig später zur Detektion und/oder zur Korrektur von Übertragungsfehlern ausgewertet werden können. Die Ausgangsdaten des Kanalcodierers 3 werden einem Interleaver bzw. Verwürfler zugeführt, der diese zeitlich umordnet, um somit einen quasi-gedächtnislosen Kanal zu schaffen. Dem Interleaver 4 ist ein Burstassembler 5 nachgeschaltet, der die zu übertragenden Daten in eine Rahmenstruktur bzw. Framestruktur einbettet und in Form von Bursts, d. h. physikalischen Kanälen, einem Modulator 6 zuführt. Der Modulator 6 moduliert die zu übertragenden Informationen bzw. Daten auf ein Trägersignal auf, welches schließlich von einem Hochfrequenz-Sendeteil 7 über einen Hochfrequenzkanal, hier den Funkkanal CH1 an die empfangende Station RS bzw. MS übertragen wird.

Die empfangende Station RS weist entsprechend ein Hochfrequenz-Empfangsteil 9, einen Demodulator mit Empfangsbandfilter (Fl) 10, einen Burst-Deassembler 14, einen Deinterleaver 15, einen Kanaldecodierer 16 und einen Sprachdecodierer 17 auf, die entsprechend die Funktionen der zuvor erläuterten Bauteile bzw. Module der sendenden Station TS rückgängig machen. In einer optionalen Zusatzeinrichtung 11 ist eine Inversion eines Empfangsbandfilters F1 bzw. eine Verbreiterungsfilterung F2 vorgesehen. Dies wird weiter unten genauer erläutert. Dieser folgt eine Analyse- und Filtereinrichtung 12 zur spektralen Analyse und Signal-zu-Rauschverhältnisschätzung des Empfangssignals und anschließenden selektiven bzw. adaptiven Empfangsfilterung F3. Weiterhin ist bei dem vorliegenden Ausführungsbeispiel zwischen der Analyse- und Filtereinrichtung 12 und dem Burst-Deassembler 14 ein Entzerrer 13 bereit gestellt. Die Analyseeinrichtung 12 analysiert die von der empfangenden Station RS empfangenen Bursts und bestimmt, ob in den empfangenen Daten Nachbarkanalstörungen vorliegen. Bei Feststellen von Nachbarkanalstörungen in dem Frequenzspektrum des analysierten Bursts werden dessen Abtastwerte, welche von dem Demodulator/Empfangsfilter 10 kommend in der Regel in komplexer digitaler Form vorliegen, gefiltert, um die Nachbarkanalstörungen zu beseitigen, während bei Nichtfeststellen von Nachbarkanalstörungen die Abtastwerte des Bursts vorzugsweise unverändert dem nachgeschalteten Entzerrer 13 sowie den nachfolgenden Bauteilen zur weiteren Signalverarbeitung zugeführt werden. Die Funktion der Einheit 12 wird vorzugsweise von dem in zellularen mobilen Stationen vorgesehenen digitalen Signalprozessor gemäß einem entsprechend geeigneten Algorithmus ausgeführt. Alternativ können jedoch auch bauliche Komponenten die entsprechenden Funktionen ausführen.

Das Erfassen von Nachbarkanalstörungen kann auf verschiedene Art und Weise durchgeführt werden, wobei vorzugsweise zunächst die Energie in einem schmalen Frequenzband am unteren Ende sowie am oberen Ende des Frequenzspektrums des zu analysierenden Bursts bestimmt wird. Ein Vergleich der derart bestimmten Energien, insbesondere eine Quotientenbildung ermöglicht eine Entscheidung hinsichtlich Nachbarkanalstörungen, da diese Werte in der Regel deutlich von der mittleren Burstenergie abweichen und von dieser unabhängig sind. Ohne Nachbarkanalstörung ist im Fall einer Quotientenbildung der Quotient im Idealfall gleich 1, so dass Nachbarkanalstörungen dadurch erkannt werden können, dass der Quotientenwert mit einem um den Wert 1 liegenden Toleranzbereich, d. h. mit einem unteren und einem oberen Grenzwert verglichen wird. Liegt der Quotientenwert außerhalb dieses Toleranzbereiches, wird auf das Vorliegen von Nachbarkanalstörungen geschlossen. Im Falle einer Nachbarkanalstörung kann eine Filterung, beispielsweise in Form einer nichtrekursiven digitalen FIR-Tiefpassfilterung (Finite Impulse Response) mit linearem Phasengang angewendet werden, wobei eine unsymmetrische Filterung zweckmäßig sein kann.

Zur Bestimmung der Energie am unteren und am oberen Ende des Burstspektrums kann z. B. das Spektrum der komplexen Abtastwerte des Bursts um einen Wert +Δf bzw. einen Wert -Δf verschoben und das verschobene Burstspektrum jeweils anschließend mit einem Tiefpass gefiltert werden. Dabei wird vorzugsweise eine rekursive digitale IIR-Tiefpassfilterung (Infinite Impulse Response) verwendet, da in diesem Fall der Realisierungsaufwand gegenüber einer FIR-Filterung geringer ist und zudem der nicht-lineare Phasengang der IIR-Tiefpassfilterung nicht bei der Detektion stört. Jedoch sind auch beliebige weitere Verfahren zum Bestimmen der Energie oder direkt von Nachbarkanalstörungen einsetzbar. Verschiedene Beispiele sind insbesondere in der WO 00/72454 A1 erläutert.

Gemäß einem besonders bevorzugten Ausführungsbeispiel wird zum Bestimmen, ob und/oder auf welcher Seite des Frequenzspektrums ein Nachbarkanal vorhanden ist, zur Energieschätzung das geschätzte Signal-zu-Rausch-Verhältnis (SNR) verwendet, wobei dies insbesondere zusätzlich zu den vorstehend beschriebenen oder anderen Energieschätzungen verwendet werden kann.

Diese Verfahrensweise erscheint vorteilhaft, da insbesondere für EDGE Kanalcodierschemata mit sehr geringer Redundanz definiert werden sollen. In diesen sollte ein EDGE-Empfänger vor der Decodierung keine oder kaum Bitfehler erzeugen, um die geforderte Empfangsqualität zu erreichen. Die Detektion, ob eine Nachbarkanalstörung vorhanden ist oder nicht, sollte daher sehr präzise sein, da es selbst bei gutem Signal-zu-Rausch-Verhältnis und bei zu enger Empfangsbandfilterung zu Bitfehlern und somit zu Decodierfehlern kommen kann. Eine übliche reine Nachbarkanal-Energieschätzung als Detektionkriterium erscheint für diese Zwecke in der Regel zu ungenau, da unter Umständen Nachbarkanalenergie detektiert bzw. bestimmt wird, obwohl keine derartige Energie vorhanden ist. Dies ergibt sich unter anderem aus den spektralen Eigenschaften der Nutzdaten, von denen eine endliche Zahl über einen Burst verteilt wird und aus den Eigenschaften des Übertragungskanals, welcher als Mehrwegekanal ausgestaltet ist, wobei durch beide, Nutzdateneigenschaften und Übertragungskanaleigenschaften Nachbarkanalenergie vorgetäuscht werden kann. Derartige Falschdetektionen können im Fall von GMSK-Empfangsstationen aufgrund deren höherer Robustheit im Vergleich zu EDGE-Empfängern vernachlässigt werden.

Besonders vorteilhaft ist die Schätzung des Signal-zu-Rausch-Verhältnisses während einer Trainingssequenz eines empfangenen Bursts, wobei vorzugsweise eine enge und eine breite Empfangsbandfilterung verwendet werden. Dadurch ergeben sich zwei verschiedene Ergebnisse für Signal-zu-Rausch-Verhältnisse SNR1 bzw. SNR2. Ergeben sich dabei stark unterschiedliche Signal-zu-Rausch-Werte SNR1 bzw. SNR2, so kann relativ sicher auf das Vorhandensein von Nachbarkanalenergie geschlossen werden, z.B. falls |SNR1 - SNR2| > TR mit TR als gesetztem Schwellenwert gilt. Gleichkanalstörungen und rauschartige Störungen werden sich hingegen bei den Ergebnissen der engen und der breiten Empfangsbandfilterung zur Bestimmung des Signal-zu-Rausch-Verhältnisses in den Werten SNR1 bzw. SNR2 kaum bemerkbar machen. Wie bereits ausgeführt, kann eine derartige Bestimmung von Nachbarkanalstörungen in vorteilhafter Weise auch mit bereits vorstehend und weiteren Verfahren zur Bestimmung von störenden Frequenzeinflüssen, Energien usw. verwendet werden.

Gemäß einer weiteren vorteilhaften Ausführungsform, die ebenfalls mit der vorstehend bezeichneten Verfahrensweise sowie der vorstehend beschriebenen Ausführungsform kombinierbar ist, kann die nachfolgende Empfangsbandfilterung in vorteilhafter Weise in Abhängigkeit von der jeweiligen aktuellen Stärke der Nachbarkanalenergie bzw. Nachbarkanalstörung adaptiv durchgeführt werden. Bei starken Störungen durch hier z. B. den Nachbarkanal CH0 wird entsprechend stärker gefiltert als bei schwächeren Störungen. Dieser Zusammenhang kann dabei durch beliebige Funktionen realisiert und berücksichtigt werden.

Insbesondere ist es möglich, eine Schwelle TR festzusetzen, die mit der Stärke der Störung verglichen wird, wobei oberhalb der Schwelle TR eine stärkere Filterung vorgenommen wird als unterhalb der Schwelle TR oder aber beispielsweise auch nur oberhalb der Schwelle TR gefiltert wird, während unterhalb der Schwelle nicht gefiltert wird. Eine solche Verfahrensweise kann auch für beispielsweise die Erzeugung eines GMSK-Signals vorteilhaft eingesetzt werden.

Insbesondere bei der Erzeugung eines EDGE-Signals ist es jedoch vorteilhafter, eine feinere Abstufung vorzunehmen, was beispielsweise durch die Definition einer Vielzahl von Schwellen TR mit zugeordneten Störwerten erfolgen kann. Weiterhin werden den verschiedenen Schwellen entsprechende Filter mit verschiedener Bandbreite und/oder verschieden steilen Filterflanken zugeordnet. Dadurch können verschiedene Bandbreiten von Frequenzbändern und Steilheiten der Filterflanken berücksichtigt werden.

Besonders aufwendig, jedoch prinzipiell auch vorteilhaft realisierbar, ist die Bestimmung einer jeweils eigenen Filtercharakteristik und die entsprechende Programmierung eines Filters für die jeweils momentan erforderlichen Verhältnisse auf der Funkschnittstelle V.

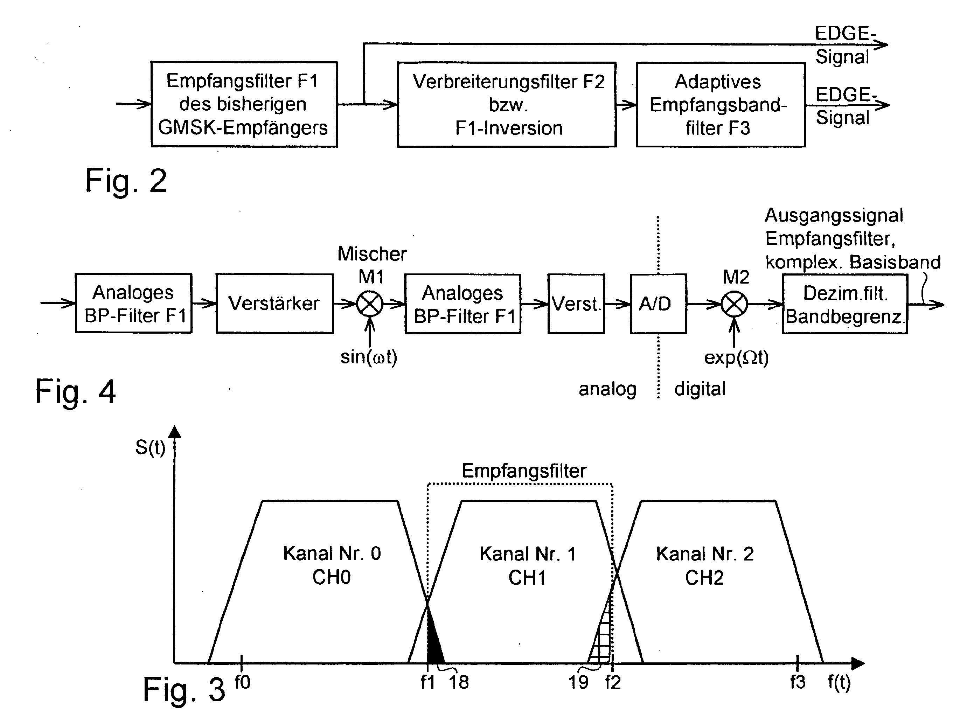

Gemäß einer besonders bevorzugten Ausführungsform wird eine adaptive Empfangsbandfilterung F3 in einem Empfänger durchgeführt, dessen eigentliche Empfangsbandfilterung F1 auf eine engere Bandbreite ausgelegt ist, beispielsweise auf die Bandbreite gemäß GSM. Eine entsprechende Umsetzung kann durch Software-gestützte oder Hardware-gestützte Module bzw. Bausteine erfolgen, wobei eine besonders bevorzugte Ausführungsform den Aufbau der Fig. 2 aufweist.

Ein in der empfangenen Station RS bereits implementierter Empfangsfilter F1 soll bei dem dargestellten Ausführungsbeispiel für bisherige GMSK-Empfangsstationen ausgelegt sein. Von diesem Empfangsfilter F1 ausgegebene Signale sind hier entsprechend die bisherigen GMSK-Signale.

Zum Erzeugen eines andersartigen Signals, beim vorliegenden Beispiel eines EDGE-Signals wird ein weiteres Modul vorgesehen, wobei als Eingangssignal für das Zusatzmodul bzw. den Zusatzfilter das Ausgangssignal des Empfangsfilters F1 verwendet wird. Möglich ist dies durch direktes Verbinden des Ausgangs des Empfangsfilters F1 mit dem Eingang des Zusatzfilters F2, F3, möglich ist aber auch das Abgreifen einer Ausgangssignalleitung, wie dies in Fig. 2 dargestellt ist.

In dem Zusatzfilter wird in einem ersten Modul, insbesondere einem Verbreiterungsfilter F2 bzw. einer F1-Inversionseinrichtung, die Filterwirkung des Empfangsfilters F1 ganz oder teilweise rückgängig gemacht bzw. aufgehoben, wobei insbesondere Alias- und Bau- sowie Programmieraufwandeffekte zu berücksichtigen sind.

Das Ausgangssignal des Verbreiterungsfilters F2 bzw. der F1-Inversionseinrichtung wird dann einem weiteren Empfangsbandfilter F3 zugeführt, der vorzugsweise als adaptiver Filter F3 ausgebildet ist und aus dem eingegebenen Signal ein gewünschtes Signal, hier ein gewünschtes EDGE-Signal erzeugt.

Ein solcher Aufbau bietet den besonderen Vorteil, dass bei Anwendung im bisherigen GSM-System bisherige GSM-Empfangsstationen bzw. deren Empfänger nahezu unverändert für die GMSK-Signalverarbeitung verwendet werden können. EDGE-Signale können durch das Hinzufügen einer separaten oder zusätzlichen Verarbeitungskette erzeugt werden. Insbesondere können somit bereits für den Einsatz getestete und abgenommene Empfänger verwendet werden, so dass lediglich die Funktionen des zusätzlichen Moduls getestet und abgenommen werden müssen. In vorteilhafter Weise müssen auch die gemeinsam nutzbaren Vorverarbeitungsstufen bzw. -module nicht neu konstruiert, getestet und abgenommen werden.

Anhand Fig. 4 wird nachfolgend das Grundprinzip eines Empfängers bzw. Empfangsmoduls schematisiert beschrieben. Das ankommende Signal, beispielsweise ein GMSK- oder ein EDGE-Signal, liegt im Bandpassbereich vor. Es wird in einem ersten Schritt mittels eines Bandpass-Filters BP bandbegrenzt, nachfolgend in einem Verstärker V verstärkt und durch einen analogen Mischer M1 in eine Zwischenfrequenz ZF überführt. Das Mischen im Mischer M1 ist hier beispielhaft durch eine Multiplikation mit sin(ωt) angedeutet. Bei älteren Empfangskonzepten kann mit einem weiteren analogen Bandpassfilter, Mischer und Verstärker noch eine weitere Zwischenfrequenz erzeugt und verwendet werden, wobei dies hier nicht weiter betrachtet werden soll. Nach einem Bandpassfilter wird das Signal, optional verstärkt, von einem Analog/Digital-Wandler digitalisiert. Danach erfolgt durch einen digitalen Mischvorgang in einem Mischer M2 die Umsetzung in das komplexe Basisband, eine Dezimation der Abtastrate sowie eine Begrenzung des Signals S auf die Bandbreite von GMSK.

Abgesehen von ausschließlich realisierungsbedingten nichtlinearen Verzerrungen handelt es sich dabei um eine lineare Transformation des empfangenen Antennensignals in das komplexe Basisband. Alle Filter der Empfängerkette können dann in einem Frequenzgang zusammengefasst werden, was hier durch den Empfangsfilter F1 realisiert wird.

Dieser Empfangsfilter F1 ist ein äquivalenter digitaler Filter mit einer entsprechend der gewählten Abtastrate vorhandenen Bandbreite. Um diese Bandbreite zu erhöhen, kann entweder ein Verbreiterungsfilter F2 eingesetzt werden oder eine Inversion durch ein numerisches Verfahren, beispielsweise ein Gauss-Seidel-Verfahren angewendet werden.

Ein Filter mit einem inversen Frequenzgang zu dem des Empfangsfilters F1 lässt sich durch mehrere Verfahren bestimmen, beispielsweise eine Fouriertransformation des Ausgangssignals/der Filtercharakteristik des Empfangsfilters F1, durch eine Inversion im Frequenzbereich oder durch eine inverse Fouriertransformation und zeitliche Fensterung im Zeitbereich. Ein anderer Ansatz besteht in der Berechnung eines inversen Filters im Sinne des minimalen Fehlerquadrates, wobei ein lineares Gleichungssystem gelöst wird. Unabhängig davon, wie das inverse Filter berechnet wurde, weist es aufgrund des Tiefpassverhaltens des Empfangsfilters F1 ein Hochpassverhalten auf.

Der so berechnete inverse Filter kann in vorteilhafter Weise als Verbreiterungsfilter F2 direkt eingesetzt werden. Wird nur ein etwas breiterer Durchlassbereich als der des Empfangsfilters F1 verwendet, so kann ein Tiefpassfilter, insbesondere mit dem gewünschten Frequenzgang, mit dem inversen Filter gefaltet und optional zeitlich gefenstert werden, um einen Bandpass-Filterentwurf für den Verbreiterungsfilter F2 zu erhalten.

Alternativ für die Berechnung des Verbreiterungsfilters F2 aus dem Empfangsfilter F1 können numerische Verfahren verwendet werden. Bei diesen Verfahren wird der Verbreiterungsfilter F2 derart eingestellt, dass das Ausgangssignal dieses Verbreiterungsfilters F2 im Sinne einer Zielfunktion möglichst optimal ist. Eine derartige Zielfunktion kann beispielsweise sein, dass im Sinne des minimalen Fehlerquadrates das Ausgangssignal des Verbreiterungsfilters F2 möglichst gut mit der gesendeten Datenfolge eines EDGE-Signals übereinstimmt. Diese Optimierung kann iterativ, beispielsweise mit einem Gauss-Seidel-Verfahren, gelöst werden.

## Patentansprüche

1. Verfahren zum Filtern eines Funksignals in einem Funk-Kommunikationssystem (GSM) mit zumindest einer zeitweilig sendenden Station (BS, TS) und zumindest einer zu entsprechenden Zeiten empfangenden Station (MS, RS), die über eine Funk-Schnittstelle (V) mit einer Vielzahl von möglichen Funkkanälen (CH0, CH1) mit jeweils begrenzter Bandbreite (f0-f1, f1-f2) miteinander kommunizieren, wobei
- das Sendesignal (S) mit Daten (D) bzw. Informationen über einen der Funkkanäle (CH1) gesendet wird und
- die Einflüsse von das Sendesignal (S) störenden Signalen (N) auf Nachbarkanälen (CH0) in der empfangenden Station (RS) bestimmt und mit einem Empfangsfilter (F1) herausgefiltert werden,
**dadurch gekennzeichnet,**
**dass** zur Bestimmung, ob ein störendes Nachbarsignal vorliegt und auf welcher Seite des Spektrums des Funkkanals (CH1) das störende Signal (N) des Nachbarkanals (CH0) vorliegt, das Signal-zu-Rausch-Verhältnis (SNR1, SNR2) des empfangenen Signals (S) mit einer engen und mit einer breiten Empfangsbandfilterung ermittelt und verwendet wird, wobei bei einem Differenzbetrag (|SNR1-SNR2|) der beiden Signal-zu-Rausch-Verhältnisse (SNR1 bzw. SNR2), der größer als zumindest eine erste Schwelle (TR) ist, auf eine Störung durch einen Nachbarkanal (CH0) geschlossen wird (|SNR1-SNR2| > TR).

2. Verfahren nach Anspruch 1, **dadurch gekennzeichnet, dass** das jeweilige Signal-zu-Rausch-Verhältnis (SNR1, SNR2) während einer Trainingssequenz eines empfangenen Bursts bestimmt wird.

3. Verfahren nach Anspruch 1 oder 2, **dadurch gekennzeichnet, dass** zum Herausfiltern von störenden Signalen (N) zumindest eines Nachbarkanals (CH0) ein adaptives Filter (F3) verwendet wird, dessen Dimensionierung in Abhängigkeit von der Stärke der Störung ausgeführt wird.

4. Verfahren nach Anspruch 3, **dadurch gekennzeichnet, dass** als Maß der Stärke der Störung des empfangenen Signals (S) die Energiestärke der störenden Signale (N) und/oder ein Signal-zu-Rausch-Verhältnis (SNR1/SNR2) in zumindest einem Nachbarkanal (CH0) bestimmt wird.

5. Verfahren nach Anspruch 3 oder 4, **dadurch gekennzeichnet,**
- **dass** eine Vielzahl von Schwellen (TR) verwendet wird, die dem Bereich der Stärke der Störungen zugeordnet werden, und
- **dass** jeder Schwelle eine verschiedene Filtercharakteristik für das Herausfiltern von störenden Signalen (N) zugeordnet wird.

6. Verfahren nach einem der vorhergehenden Ansprüche, **dadurch gekennzeichnet, dass** die in der empfangenden Station (RS) durch den Empfangsfilter (F1) gefilterten Signale (GMSK-Signal) einer Signalverarbeitung (F2) zugeführt werden, die zumindest einen Teil der Filterwirkung des Empfangsfilters (F1) rückgängig macht.

7. Verfahren nach Anspruch 6, **dadurch gekennzeichnet, dass** zum rückgängig machen der Filterwirkung ein Inversions- oder Verbreiterungsfilter (F2) verwendet wird.

8. Verfahren nach Anspruch 6 oder 7, **dadurch gekennzeichnet, dass** zur Optimierung einer Zielfunktion des Verbreiterungsfilters (F2) ein Gauss-Seidel-Verfahren verwendet wird.

9. Verfahren nach einem der Ansprüche 6 bis 8, **dadurch gekennzeichnet, dass** nach dem zumindest teilweisen Rückgängigmachen eine weitere Filterung (F3) durchgeführt wird.

10. Verfahren nach Anspruch 9, **dadurch gekennzeichnet, dass** als weitere Filterung (F3) eine adaptive Filterung vorgenommen wird, die in Abhängigkeit einer erfassten Nachbarkanalstörung (N) durchgeführt wird.

11. Verfahren nach einem vorstehenden Anspruch, **dadurch gekennzeichnet, dass** empfängerseitig zumindest ein Signal als EDGE-Signal ausgegeben wird.

12. Adaptiver Filter zur Durchführen eines Verfahrens nach einem der vorhergehenden Ansprüche.

13. Zusatzfilter für eine Kommunikationssystemvorrichtung (MS, RS) zur Durchführung des Verfahrens nach einem der Ansprüche 6 bis 11 mit
- einer ersten Filterstufe (F2) zum zumindest teilweisen Aufheben der Wirkung eines zuvor angewandten Filters (F1) und
- einer zweiten Filterstufe (F3) zum erneuten Filtern der von der Filterwirkung zumindest teilweise bereinigten Signale oder Daten, insbesondere zum Erzeugen eines EDGE-Signals aus einem GMSK-Signal.

14. Zusatzfilter nach Anspruch 13, zum Einbau in eine Funkstation (RS) mit einem Filtereingang, der zum Abgreifen einer Leitung hinter dem Ausgang eines bestehenden Signalfilters (F1) der Funkstation (RS) ausgebildet ist.

## Claims

1. Method for filtering a radio signal in a radio communications system (GSM) with at least one temporarily transmitting station (BS, TS) and at least one receiving station at the corresponding times (MS, RS), which communicate with each other via a radio interface (V) with a plurality of the possible radio channels (CH0, CH1) each with a restricted bandwidth (f0-f1, f1-f2) in which case
- the send signal (S) is sent with data (D) or information over one of the radio channels (CH1) and
- the effects of signals (N) interfering with the send signal (S) on adjacent channels (CH0) are determined in the receiving station (RS) and filtered out with a receive filter (F1),
**characterized in that**
to determine whether there is an interfering signal present and whether or on what side of the spectrum of the radio channel (CH1) the interfering signal (N) of the adjacent channel (CH0) is, the signal-to-noise ratio (SNR1, SNR2) of the received signal (S) is determined and used with a narrow and with a wide receive band filtering, in which case with a difference amount (|SNR1-SNR2|) of the two signal-to-noise ratios (SNR1 or SNR2) which is greater than at least a first threshold (TR) it can be concluded that there is interference from an adjacent channel (CH0) (|SNR1-SNR2| > TR)..

2. Method in accordance with Claim 1, **characterised in that** the relevant the signal-to-noise ratio (SNR1, SNR2) is determined during a training sequence of a received burst.

3. Method in accordance with Claim 1 or 2, **characterised in that**, an adaptive filter (F3) for filtering out interfering signals (N) of at least one adjacent channel (CH0) is dimensioned depending on the strength of the interference.

4. Method in accordance with Claim 3, **characterised in that**,
as a measure of the strength of interference to the received signal (S) the energy strength of the interfering signals (N) and/or a signal-to-noise ratio (SNR1/SNR2) in at least one adjacent channel is determined (CH0).

5. Method in accordance with Claim 4 or 5, **characterised in that**,
- a plurality of thresholds (TR) is used which are assigned to the range of the strength of the interference, and
- each threshold is assigned a different filter characteristic for filtering out interfering signals (N).

6. Method in accordance with one of the previous claims, **characterised in that** the signals filtered in the receiving station (RS) by the receive filter (F1) (GMSK signal) are fed to signal processing (F2), which reverses at least one part of the previous filter effect (F1).

7. Method in accordance with Claim 6, **characterised in that**
to reverse the filter effect an inversion or widening filter (F2) is used.

8. Method in accordance with Claim 6 or 7, **characterised in that**, for optimizing a target function of the widening filter a Gauss-Seidel procedure is used.

9. Method in accordance with one of Claims 6 to 8, **characterised in that** after the at least part reversal a further filtering (F3) is performed.

10. Method in accordance with Claim 9, in which
as further filtering (F3) an adaptive filtering depending on a recorded adjacent channel interference (N) is performed.

11. Method in accordance with one of the previous claims, **characterised in that** on the receiver side at least one signal is output as an EDGE signal.

12. Adaptive filter to execute a method in accordance with a previous claim.

13. Additional filter for a communications device (MS, RS) to execute a method in accordance with one of the claims 6 to 11 with
- a first filter stage (F2) to at least partly remove the effect of a previously applied filter (F1) and
- a second filter stage (F3) for renewed filtering of the signals or data at least partly cleansed of the filter effect, especially to create an EDGE signal from a GMSK signal.

14. Additional filter in accordance with Claim 14, for installation in a radio station (RS) with a filter input embodied to tap a line behind the output of an existing signal filter (F1) of the radio station (RS).

## Revendications

1. Procédé pour filtrer un signal radio dans un système de communication radio (GSM) comprenant au moins une station (BS, TS) émettant par intermittence et au moins une station (MS, RS) recevant à des moments correspondants, lesquelles stations communiquent entre elles par l'intermédiaire d'une interface radio (V) dotée d'une pluralité de possibles canaux radio (CH0, CH1) ayant chacun une bande passante limitée (f0-f1, f1-f2),
- le signal d'émission (S) étant émis avec des données (D) resp. informations par l'un des canaux radio (CH1) et
- les influences de signaux (N) perturbant le signal d'émission (S) sur des canaux voisins (CH0) étant déterminées dans la station réceptrice (RS) puis éliminées à l'aide d'un filtre de réception (F1),
**caractérisé en ce que**
pour déterminer si un signal voisin perturbant est présent et de quel côté du spectre du canal radio (CH1) ledit signal perturbant (N) du canal voisin (CH0) est présent, on détermine et on utilise le rapport signal/bruit (SNR1, SNR2) du signal reçu (S) avec un filtrage étroit et un filtrage large de la bande de réception et, lorsqu'une valeur de différence (| SNR1-SNR2 | ) des deux rapports signal/bruit (SNR1 resp. SNR2) est supérieure à au moins un premier seuil (TR), on conclut à une perturbation par un canal voisin (CH0) (| SNR1-SNR2 |> TR).

2. Procédé selon la revendication 1, **caractérisé en ce qu'**on détermine le rapport signal/bruit respectif (SNR1, SNR2) pendant une séquence d'entraînement d'un burst reçu.

3. Procédé selon la revendication 1 ou 2, **caractérisé en ce qu'**on utilise un filtre adaptatif (F3) pour éliminer les signaux perturbants (N) d'au moins un canal voisin (CH0), filtre dont le dimensionnement est réalisé en fonction de l'intensité de la perturbation.

4. Procédé selon la revendication 3, **caractérisé en ce qu'**on détermine comme mesure de l'intensité de la perturbation du signal reçu (S) l'intensité énergétique du signal perturbant (N) et/ou un rapport signal/bruit (SNR1/SNR2) dans au moins un canal voisin (CH0).

5. Procédé selon la revendication 3 ou 4, **caractérisé en ce que**
- on utilise une pluralité de seuils (TR) que l'on attribue en fonction du niveau de l'intensité des perturbations, et
- on attribue à chaque seuil une caractéristique de filtrage différente pour l'élimination des signaux perturbants (N).

6. Procédé selon l'une des revendications précédentes, **caractérisé en ce que** les signaux filtrés (signal GMSK) à l'aide du filtre de réception (F1) dans la station réceptrice (RS) amenés à un traitement du signal (F2) qui annule au moins une partie de l'effet filtrant du filtre de réception (F1).

7. Procédé selon la revendication 6, **caractérisé en ce qu'**on utilise un filtre d'inversion ou d'élargissement (F2) pour annuler l'effet filtrant.

8. Procédé selon la revendication 6 ou 7, **caractérisé en ce qu'**on utilise un procédé de Gauss-Seidel pour optimiser une fonction de performance du filtre d'élargissement (F2).

9. Procédé selon l'une des revendications 6 à 8, **caractérisé en ce qu'**on pratique un autre filtrage (F3) après ladite annulation au moins partielle.

10. Procédé selon la revendication 9, **caractérisé en ce qu'**on utilise comme autre filtrage (F3) un filtrage adaptatif que l'on pratique en fonction d'une perturbation (N) détectée sur un canal voisin.

11. Procédé selon une revendication précédente, **caractérisé en ce qu'**à la réception au moins un signal est émis comme signal EDGE.

12. Filtre adaptatif destiné à mettre en oeuvre un procédé selon l'une des revendications précédentes.

13. Filtre additionnel pour un dispositif (MS, RS) d'un système de communication destiné à la mise en oeuvre du procédé selon l'une des revendications 6 à 11, avec
- un premier niveau de filtrage (F2) destiné à annuler au moins partiellement l'effet d'un filtre (F1) utilisé auparavant, et
- un deuxième niveau de filtrage (F3) destiné à un nouveau filtrage des signaux ou données épurées au moins partiellement de l'effet filtrant, en particulier destiné à produire un signal EDGE à partir d'un signal GMSK.

14. Filtre additionnel selon la revendication 13 destiné à être monté dans une station de radiocommunication (RS) comprenant une entrée de filtre qui, pour permettre de brancher une ligne, est réalisée à la suite de la sortie d'un filtre existant (F1) de la station de radiocommunication (RS).
